Europäisches Patentamt

European Patent Office

Office européen des brevets

(19)

(11) **EP 0 785 021 B1**

(12) **FASCICULE DE BREVET EUROPEEN**

(45) Date de publication et mention
de la délivrance du brevet:
**24.04.2002 Bulletin 2002/17**

(51) Int Cl.⁷: **B01J 29/06**, C10G 49/16

(21) Numéro de dépôt: **97400094.5**

(22) Date de dépôt: **17.01.1997**

(54) **Catalyseur comprenant une zéolithe de type faujasite et une zéolithe de type TON et procédé d'hydroconversion de charges pétrolières hydrocarbonées**

Faujasit-Zeolith und TON-Zeolith enthaltender Katalysator und Verfahren zur Wasserstoffumwandlung eines Kohlenwasserstoffeinsatzes

Catalyst comprising a faujasite and a TON zeolite and hydrocarbon hydroconversion process

(84) Etats contractants désignés:
**BE DE FR GB IT NL**

(30) Priorité: **22.01.1996 FR 9600670**

(43) Date de publication de la demande:
**23.07.1997 Bulletin 1997/30**

(73) Titulaire: **INSTITUT FRANCAIS DU PETROLE**
**92852 Rueil-Malmaison Cedex (FR)**

(72) Inventeurs:
• **Benazzi, Eric**
**78360 Montesson (FR)**
• **Mignard, Samuel**
**78400 Chatou (FR)**
• **George-Marchal, Nathalie**
**75005 Paris (FR)**
• **Kasztelan, Slavik**
**92500 Rueil Malmaison (FR)**

(56) Documents cités:
| | |
|---|---|
| EP-A- 0 065 400 | EP-A- 0 186 446 |
| EP-A- 0 288 363 | EP-A- 0 345 106 |
| WO-A-91/17829 | DE-A- 4 114 874 |

Remarques:
Le dossier contient des informations techniques présentées postérieurement au dépôt de la demande et ne figurant pas dans le présent fascicule.

## EP 0 785 021 B1

**Description**

La présente invention concerne un catalyseur comprenant une zéolithe de type structural TON et une zéolithe Y de type structural faujasite, associées à une matrice habituellement amorphe ou mal cristallisée, et au moins un élément hydrogénant, et son utilisation dans un procédé d'hydroconversion de charges pétrolières lourdes.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Par rapport au craquage catalytique, l'intérêt de l'hydrocraquage catalytique est de fournir des distillats moyens, carburéacteurs et gazoles, de très bonne qualité. En revanche, l'essence produite présente un indice d'octane beaucoup plus faible que celle issue du craquage catalytique.

Les catalyseurs utilisés en hydrocraquage sont tous du type bifonctionnel associant une fonction acide à une fonction hydrogénante. La fonction acide est apportée par des supports de grandes surfaces (150 à 800 m$^2$.g$^{-1}$ géné-ralement) présentant une acidité superficielle, telles que les alumines halogénées (chlorées ou fluorées notamment), les combinaisons d'oxydes de bore et d'aluminium, les silices-alumines amorphes et les zéolithes. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI de la classification périodique tels que molybdène et tungstène et au moins un métal du groupe VIII.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée (supérieure ou égale à 390 °C), et à vitesse spatiale d'alimentation faible (la VVH exprimée en volume de charge à traiter par unité de volume de catalyseur et par heure est généralement inférieure ou égale à 2) mais dotés d'une très bonne sélectivité en distillats moyens. Inversement, une fonction acide forte et une fonction hydrogénante faible donnent des catalyseurs très actifs mais présentant une mauvaise sélectivité en distillats moyens. La recherche d'un catalyseur convenable sera donc centrée sur un choix judicieux de chacune des fonctions pour ajuster le couple activité/sélectivité du catalyseur.

Ainsi, c'est un des grands intérêts de l'hydrocraquage de présenter une grande flexibilité à divers niveaux : flexibilité au niveau des catalyseurs utilisés, qui amène une flexibilité des charges à traiter et au niveau des produits obtenus. Un paramètre aisé à maîtriser est l'acidité du support du catalyseur.

Les catalyseurs conventionnels de l'hydrocraquage catalytique sont, pour leur grande majorité, constitués de supports faiblement acides, tels les silice-alumines amorphes par exemple. Ces systèmes sont utilisés pour produire des distillats moyens de très bonne qualité, et encore, lorsque leur acidité est très faible, des bases huiles.

Dans les supports peu acides, on trouve la famille des silice-alumines amorphes. Beaucoup de catalyseurs du marché de l'hydrocraquage sont à base de silice-alumine associée, soit à un métal du groupe VIII soit, de préférence quand les teneurs en poisons hétéroatomiques de la charge à traiter dépassent 0,5 % en poids, à une association de sulfures des métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les catalyseurs comportant de la zéolithe Y de type structural FAU, présentent quant à eux une activité catalytique supérieure à celle des silice-alumines amorphes, mais présentent des sélectivités en produits légers qui sont plus élevées.

Le brevet FR 2,663,946 A décrit un catalyseur de craquage catalytique constitué d'une matrice, d'une zéolite y et d'une zéolite à pores intermédiaires telle que ZSM-22.

Les travaux de recherche effectués par le demandeur sur de nombreuses zéolithes et solides microporeux cristallisés l'ont conduit à découvrir que, de façon surprenante, un catalyseur contenant au moins une zéolithe de type structural TON, choisie dans le groupe formé par les zéolithes THETA-1, Nu-10, KZ-2 et ISI-1 associée à une zéolithe Y de type structural FAU permet d'obtenir une sélectivité en distillats moyens nettement améliorée par rapport aux catalyseurs connus dans l'art antérieur.

Plus précisément, l'invention a pour objet un catalyseur sous forme d'extrudés comprenant un support formé d'au moins une matrice, au moins une zéolithe de type faujasite et au moins une zéolithe de type TON choisie dans le groupe formé par les zéolithes THETA-1. Nu-10, KZ-2 et ISI-1, ledit catalyseur comprenant également au moins un élément hydrogénant introduit sur le support mis en forme et choisi dans le grouge formé par les éléments des groupes VIII et VI. La composition sans hydrogénant peut aussi présenter elle-même une fonction catalytique pour certaines réactions, sans adjonction d'autres éléments.

La zéolithe TON utilisée dans la présente invention posséde une structure bien connue. La synthèse de la zéolithe Nu-10 est décrite, par exemple, dans le brevet EP 65400A. On emploiera de préférence une zéolithe de type TON au moins en partie sous forme acide (et de préférence en totalité sous forme H) ou partiellement échangée avec des cations métalliques, par exemple des cations des métaux alcalino-terreux.

La composition de la présente invention renferme aussi une zéolithe Y de structure faujasite (Zeolite Molecular Sieves Structure, chemistry and uses, D.W. BRECK, J. WILLEY and Sons 1973). Parmi les zéolithes Y que l'on peut utiliser, on emploiera de préférence une zéolithe Y stabilisée, couramment appelée ultrastable ou USY soit sous forme au moins partiellement échangée avec des cations métalliques, par exemple des cations des métaux alcalino-terreux et/ou des cations de métaux de terres rares de numéro atomique 57 à 71 inclus, soit sous forme hydrogène.

Une zéolithe acide HY est particulièrement avantageuse et est caractérisée par différentes spécifications : un rapport molaire $SiO_2/Al_2O3$ compris entre environ 8 et 70 et de manière préférée entre environ 12 et 40 : une teneur en sodium inférieure à 0,15% poids déterminée sur la zéolithe calcinée à 1100°C; un paramètre cristallin a de la maille élémentaire compris entre 24,55 x $10^{-10}$ m et 24,24 x $10^{-10}$ m et de manière préférée entre 24,38 x $10^{-10}$ m et 24,26 x $10^{-10}$ m; une capacité CNa de reprise en ions sodium, exprimée en gramme de Na par 100 grammes de zéolithe modifiée, neutralisée puis calcinée, supérieure à environ 0,85; une surface spécifique déterminée par la méthode B.E.T. supérieure à environ 400 $m^2$/g et de préférence supérieure à 550 $m^2$/g; une capacité d'adsorption de vapeur d'eau à 25°C pour une pression partielle de 2,6 torrs (soit 34,6 MPa), supérieure à environ 6%, une répartition poreuse comprenant entre 1 et 20% et de préférence entre 3 et 15% du volume poreux contenu dans des pores de diamètre situé entre 20 x $10^{-10}$ m et 80 x $10^{-10}$m, le reste du volume poreux étant contenu dans les pores de diamètre inférieur à $20.10^{-10}$ m.

Le composition de la présente invention renferme également au moins une matrice habituellement amorphe ou mal cristallisée choisie par exemple dans le groupe formé par l'alumine, la silice, la magnésie, les argiles, l'oxyde de titane, l'oxyde de bore, la zircone, les phosphates d'aluminium, de titane ou de zirconium, les mélanges de deux au moins de ces composés, par exemple les combinaisons alumine-oxyde de bore. La matrice est de préférence choisie dans le groupe formé par la silice, l'alumine, la magnésie, les combinaisons silice-alumine, les combinaisons silice-magnésie et l'argile.

La composition de la présente invention renferme donc une partie matrice et zéolithique qui assurent la fonction acide, dans les proportions suivantes :

    a) de 10 à 99,9 %, de préférence de 20 à 99,9 % et de manière encore plus préférée de 29,9 à 99,8 % en poids d'au moins une matrice,

    b) de 0,05 à 89,95 %, de préférence de 0,05 à 79,95 % et de manière encore plus préférée de 0,1 à 69 % en poids d'au moins une zéolithe de type structural TON, forme hydrogène et ayant les caractéristiques données ci-avant,

    c) de 0,05 à 89,95 %, de préférence de 0,05 à 79,95 % et de manière encore plus préférée de 0,1 à 69 % d'au moins une zéolithe Y de type structural faujasite (FAU), forme hydrogène, ayant les caractéristiques données ci-avant.

La composition de la présente invention peut être préparée par toutes les méthodes bien connues de l'homme du métier. Avantageusement, elle est obtenue par mélange de la matrice et des zéolithes puis mise en forme. L'élément hydrogénant est introduit lors du mélange, ou encore après mise en forme (préféré). La mise en forme est suivie d'une calcination, l'élément hydrogénant est introduit avant ou après cette calcination. La préparation se termine dans tous les cas par une calcination à une température de 250 à 600°C. Une des méthodes préférées dans la présente invention consiste à malaxer la zéolithe de type structural TON, et la zéolithe Y de type structura faujasite (FAU) dans un gel humide d'alumine pendant quelques dizaines de minutes, puis à passer la pâte ainsi obtenue à travers une filière pour former des extrudés de diamètre compris entre 0,4 et 4 mm.

Le catalyseur renferme en outre une fonction hydrogénante. La fonction hydrogénante telle qu'elle a été définie précédemment (éléments du groupe VIII ou association d'éléments de métaux des groupes VI et VIII) peut être introduite dans le catalyseur à divers niveaux de la préparation et de diverses manières.

Elle peut être introduite en partie seulement (cas, par exemple, des associations d'oxydes de métaux des groupes VI et VIII) ou en totalité au moment du malaxage des deux types de zéolithe, TON et FAU, avec le gel d'oxyde choisi comme matrice. Elle peut être introduite par une ou plusieurs opérations d'échange ionique sur le support calciné constitué des zéolithes de type structuraux TON et FAU dispersées dans la matrice choisie, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VI (notamment le molybdène ou le tungstène) ont été préalablement introduits au moment du malaxage du support. Elle peut enfin être introduite par une ou plusieurs opérations d'imprégnation du support calciné constitué des zéolithes de type structuraux TON et FAU et de la matrice, par des solutions contenant les précurseurs des oxydes de métaux des groupes VI et/ou VIII, les précurseurs des oxydes de métaux de groupe VIII étant de préférence introduits après ceux du groupe VI ou en même temps que ces derniers.

Dans le cas où les éléments sont introduits en plusieurs imprégnations des sels précurseurs correspondants, une étape de calcination intermédiaire du catalyseur devra être effectuée à une température comprise entre 250 et 600 °C.

La concentration totale en oxydes de métaux des VIII et VI est comprise entre 1% et 40% en poids du catalyseur obtenu après calcination, et de préférence entre 3 et 30% et avantageusement entre 8-40%, voire 10 et 40% et mieux 10-30%. Le rapport pondéral exprimé en oxydes métalliques entre métal (ou métaux) du groupe VI sur métal (ou métaux) du groupe VIII est compris entre 20 et 1,25 et de préférence entre 10 et 2. Le catalyseur peut également contenir du phosphore. La concentration en oxyde de phosphore ($P_2O_5$) sera avantageusement inférieure à 15% et de préférence à 10% poids.

L'imprégnation du molybdène peut alors être facilitée par ajout d'acide phosphorique dans les solutions de sels de molybdène.

Les catalyseurs ainsi obtenus, sous forme oxydes, peuvent éventuellement être amenés au moins en partie sous forme métallique ou sulfure.

Ils sont chargés en réacteur et utilisés pour l'hydrocraquage de coupe lourdes. Ils présentent une activité améliorée par rapport à l'art antérieur, et ont de plus une sélectivité amélioré pour la production de distillats moyens de très bonne qualité.

Les charges employées dans le procédé sont par exemple des gazoles, des distillats sous vide, des gazoles sous vide, des résidus désasphaltés ou hydrotraités ou équivalents. D'une façon générale, les charges ont des points d'ébullition initiaux supérieurs à 175°C, avantageusement d'au moins 280°C voire d'au moins 380°C. Les charges fortement chargées en N et S ont été de préférence préalablement hydrotraitées. Elles peuvent être constituées au moins de 80 % en volume de composés dont les points d'ébullition sont situés d'au moins 350°C de préférence entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0.01 et 5% poids. Les conditions de l'hydrocraquage telles que, température, pression, taux de recyclage d'hydrogène, vitesse volumique horaire, pourront être très variables en fonction de la nature de la charge, de la qualité des produits désirés, des installations dont dispose le raffineur.

Les températures sont en général supérieures ou égales à 230 °C et souvent comprises entre 300 °C et 430 °C. La pression est supérieure ou égale à 2 MPa et en général supérieure à 10 MPa, et inférieure à 30 MPa. La quantité d'hydrogène est au minimum de 100 1/l de charge et souvent comprise entre 260 et 3000 litres d'hydrogène par litre de charge. La vitesse volumique horaire est comprise en général entre 0,2 et 10 h$^{-1}$.

Les résultats qui importent au raffineur sont l'activité et la sélectivité en distillats moyens. Les objectifs fixés doivent être réalisés dans des conditions compatibles avec la réalité économique. Ainsi le raffineur cherche-t-il à diminuer la température, la pression, la quantité d'hydrogène et à maximiser la vitesse volumique horaire. Il est connu que la conversion peut être augmentée par une élévation de température, mais c'est souvent au détriment de la sélectivité. La sélectivité en distillats moyens s'améliore avec une augmentation de la pression ou de la quantité d'hydrogène, mais ceci au détriment de l'économie du procédé. Ce type de catalyseur permet d'atteindre dans des conditions de marche classique des sélectivités en distillats moyens de point d'ébullition compris entre 150 °C et 380 °C supérieurs à 65 %, et ceci pour des niveaux de conversion, en produits de point d'ébullition inférieur à 380 °C, supérieurs à 55 % en volume. Dans des conditions moins sévères d'hydrocraquage doux, les sélectivités en distillats moyens sont supérieures à 65 % (et généralement supérieures à 75 %) pour des niveaux de conversion supérieurs à 45 % ou 50 %. Ce catalyseur présente de plus, dans ces conditions, une stabilité remarquable. Enfin, du fait de la composition du catalyseur, celui-ci est facilement régénérable.

Les exemples suivants illustrent la présente invention sans toutefois en limiter la portée.

Exemple 1 : Préparation du catalyseur C1 (conforme à l'invention)

Préparation de la zéolithe de type structural TON

Préparation de la zéolithe de type structural TON, sous forme hydrogène, et caractéristiques physico-chimiques de la zéolithe Y, sous forme hydrogène, entrant, toutes deux, dans la composition du catalyseur C1 conforme à l'invention.

La zéolithe de type TON est préparée selon le mode opératoire décrit dans l'exemple du brevet de préparation de la zéolithe Nu-10 de type structural TON, du brevet EP 65400A.

Après calcination à 120°C durant une nuit on obtient un produit caractérisé par son diagramme de diffraction des rayons X (tableau I) et qui est caractéristique d'une zéolithe Nu-10 de type structural TON.

| $d_{hkl}$ (Å) | I/Io |
|---|---|
| 10,90 | 40 |
| 8,82 | 6 |
| 7,02 | 55 |
| 5,45 | 21 |
| 4,59 | 15 |
| 4,38 | 2 |
| 3,70 | 3,5 |
| 3,64 | 5 |
| 3,51 | 6 |
| 3,36 | 13 |
| 3,30 | 7 |
| 2,76 | 2 |
| 2,56 | 20 |
| 2,44 | 7 |
| 2,36 | 2 |
| 1,87 | 20 |

La zéolithe de type structural TON ainsi préparée est ensuite soumise à trois échanges ioniques successifs en utilisant des solutions de nitrate d'ammonium de concentration 10N, et un rapport volume de solution de nitrate d'ammonium sur masse de zéolithe de 10 ml par gramme. La teneur résiduelle en sodium est alors d'environ 65 ppm poids et le rapport Si/Al, atomique, de la zéolithe est de 51.

Les caractéristiques physico-chimiques de la zéolithe Y entrant également dans la composition du catalyseur C1 sont les suivantes

| Si/Al molaire global | 17,5 |
|---|---|
| Si/Al molaire de charpente (par RMN) | 21 |
| Na (ppm poids) | 450 |
| Paramètre cristallin (Diffraction X) (Å) | 24,27 |

Préparation du catalyseur C1 (conforme à l'invention)

48 grammes de zéolithe de type structural TON, préparée précédemment et 32 grammes de zéolithe H-Y possédant les caractéristiques physico-chimiques décrites précédemment sont dans un premier temps mélangées puis malaxées avec 120 grammes d'alumine de type SB3 fournie par la société Condéa. La pâte malaxée est ensuite extrudée à travers une filière de diamètre 1,4 mm. Les extrudés sont imprégnés à sec par une solution d'un mélange d'heptamolybdate d'ammonium, de nitrate de nickel et d'acide orthophosphorique, et enfin calcinés sous air à 550 °C in-situ dans le réacteur. Les teneurs pondérales en oxydes actifs sont les suivantes (par rapport au catalyseur) :

2,5 % en poids d'oxyde de phosphore $P_2O_5$
15 % en poids d'oxyde de molybdène $MoO_3$
5 % en poids d'oxyde de nickel NiO

La teneur globale en zéolithes dans l'ensemble (matrice + zéolithes) est de 40% avec 24% de TON et 16% de zéolithe Y.

La teneur globale massique en zéolithes dans l'ensemble du catalyseur est de 31%, la teneur pondérale en zéolithe de type structural TON est de 18,6% poids et celle en zéolithe Y de type faujasite (FAU) est de 12,4%.

Exemple 2

Préparation du catalyseur C2 (non conforme à l'invention).

On utilise une silice-alumine préparée au laboratoire contenant 25 % en poids de $SiO_2$ et 75 % en poids de $Al_2O_3$. On ajoute 3 % en poids d'acide nitrique pur à 67 % par rapport au poids sec de poudre de silice alumine afin d'obtenir la peptisation de la poudre. Après malaxage, la pâte obtenue est extrudée à travers une filière de diamètre 1,4 mm. Les extrudés sont calcinés puis imprégnés à sec par une solution d'un mélange d'heptamolybdate d'ammonium, de nitrate de nickel et d'acide orthophosphorique et enfin calcinés sous air à 550 °C. Les teneurs pondérales en oxydes actifs sont les suivantes (par rapport au catalyseur):

2,5 % en poids d'oxyde de phosphore $P_2O_5$
15 % en poids d'oxyde de molybdène $MoO_3$
5 % en poids d'oxyde de nickel NiO

Exemple 3

Préparation du catalyseur C3 (non conforme à l'invention).

15,9 grammes de zéolithe H-Y possédant les caractéristiques physico-chimiques décrites dans l'exemple 1 sont dans un premier temps mélangés puis malaxés avec 84,1 grammes d'alumine de type SB3 fournie par la société Condéa. La pâte malaxée est ensuite extrudée à travers une filière de diamètre 1,4 mm. Les extrudés sont imprégnés à sec par une solution d'un mélange d'heptamolybdate d'ammonium, de nitrate de nickel et d'acide orthophosphorique, et enfin calcinés sous air à 550 °C in-situ dans le réacteur. Les teneurs pondérales en oxydes actifs sont les suivantes (par rapport au catalyseur):

2,5 % en poids d'oxyde de phosphore $P_2O_5$
15 % en poids d'oxyde de molybdène $MoO_3$
5 % en poids d'oxyde de nickel NiO

La teneur massique en zéolithe Y de type faujasite (FAU) est de 12,3%. Cette teneur est très proche de celle du catalyseur C1 conforme à l'invention.

Exemple 4

Evaluation des catalyseurs C1, C2 et C3 dans un test d'hydrocraquage.

Les catalyseurs C1, C2 et C3 dont les préparations sont décrites dans les exemples précédents sont utilisés dans les conditions de l'hydrocraquage sur une charge pétrolière dont les principales caractéristiques sont les suivantes :

| | |
|---|---|
| point initial | 364 °C |
| point 10 % | 423 °C |
| point 20% | 446 °C |
| point 50 % | 490 °C |
| point 90 % | 552 °C |
| point final | 600 °C |
| point d'écoulement | +41 °C |
| densité (20/4) | 0,931 |
| Soufre (% poids) | 2,29 |
| Azote (ppm poids) | 1018 |

Cette charge est préalablement hydrotraitée sur un catalyseur $NiMoP/Al_2O_3$ à 385°C, sous une pression totale de 14 MPa, un débit d'hydrogène de 1000 litres d'hydrogène gazeux par litre de charge injectée et une vitesse volumique horaire de 1,0 $h^{-1}$.
Les teneurs pondérales en oxydes actifs sur le catalyseur d'hydrotraitement sont les suivantes:

3% en poids d'oxyde de phosphore $P_2O_5$
14% en poids d'oxyde de molybdène $MoO_3$
6% en poids d'oxyde de nickel NiO

La totalité de la charge hydrotraitée est injectée dans l'unité de test d'hydrocraquage qui comprend un réacteur en lit fixe, à circulation ascendante de la charge ("up-flow"), dans lequel est introduit 80 ml de catalyseur. Chacun des catalyseurs est sulfuré par un mélange n-hexane/DMDS + aniline jusqu'à 320 °C. La pression totale est de 14 MPa, le débit d'hydrogène est de 1000 litres d'hydrogène gazeux par litre de charge injectée, la vitesse volumique horaire est de 1,0 $h^{-1}$.

Les performances catalytiques sont exprimées par la température qui permet d'atteindre un niveau de conversion brute de 70 % et par la sélectivité brute. Ces performances catalytiques sont mesurées sur le catalyseur après qu'une période de stabilisation. généralement au moins 48 heures, ait été respectée.

La conversion brute CB est prise égale à :

$$CB = \% \text{ poids } 380^- \text{ effluents}$$

La sélectivité brute SB est prise égale à:

$$SB = \left( \frac{\text{poids } 150/380 \text{ effluents}}{\text{poids } 380^- \text{ effluents}} \right) \times 100$$

| N° exemple | T (°C) | SB |
|---|---|---|
| Catalyseur C1 (conforme) | 355 | 69,3 |
| Catalyseur C2 (non conforme) | 415 | 72,5 |
| Catalyseur C3 (non conforme) | 365 | 68,3 |

L'utilisation d'un catalyseur selon l'invention comportant une zéolithe de type structural TON, ici la zéolithe Nu-10, et une zéolithe Y de type structural FAU permet de diminuer la température de conversion brute CB d'une façon substantielle puisqu'un gain de 60°C environ est observé par rapport à un catalyseur à base de silice-alumine. Par rapport à un catalyseur ne contenant que la zéolithe HY, l'ajout d'une zéolithe de type Nu-10 permet un gain substantiel d'activité sans que ce soit au détriment de la sélectivité.

Exemple 5

Evaluation des catalyseurs C1, C2 et C3 dans un test d'hydrocraquage basse pression.

Les catalyseurs C1, C2 et C3 ont été comparés dans un test d'hydrocraquage basse pression également appelé hydrocraquage doux. La charge utilisée lors du test catalytique est la même que celle utilisée dans l'exemple 3 mais elle n'est pas hydrotraitée.

L'unité de test catalytique comprend un réacteur en lit fixe, à circulation ascendante de la charge ("up-flow"), dans lequel est introduit 80 ml de catalyseur. Chacun des catalyseurs est sulfuré par un mélange n-hexane/DMDS + aniline jusqu'à 320 °C. La pression totale est de 5 MPa, le débit d'hydrogène est de 500 litres d'hydrogène gazeux par litre de charge injectée, la vitesse volumique horaire est de 0,5 $h^{-1}$.

Les performances catalytiques sont exprimées par conversion brute obtenue à une température donnée (ici, 410 °C) et par la sélectivité brute pour une conversion brute égale à 50 %. Ces performances catalytiques sont mesurées sur le catalyseur après qu'une période de stabilisation, généralement au moins 48 heures, ait été respectée.

La conversion brute CB est prise égale à :

$$CB = \% \text{ poids } 380^- \text{ effluents}$$

La sélectivité brute SB est prise égale à:

$$SB = \left( \frac{\text{poids 150/380 effluents}}{\text{poids 380}^- \text{ effluents}} \right) \times 100$$

| N° exemple | CB à 410°C | SB à CB=50% |
|---|---|---|
| Catalyseur C1 (conforme) | 57,2 | 80,2 |
| Catalyseur C2 (non conforme) | 49,0 | 81,1 |
| Catalyseur C3 (non conforme) | 54,9 | 78,9 |

L'utilisation d'un catalyseur selon l'invention comportant une zéolithe de type structural TON, ici la zéolithe Nu-10, et une zéolithe Y de type structural FAU permet un gain d'environ 8% de conversion à 410°C par rapport à un catalyseur à base de silice-alumine.

Par rapport à un catalyseur ne contenant que la zéolithe HY, l'ajout d'une zéolithe de type Nu-10 permet un gain substantiel d'activité sans que ce soit au détriment de la sélectivité.

**Revendications**

1. Catalyseur sous forme d'extrudés comprenant un support formé d'au moins une matrice, au moins une zéolithe de type faujasite et au moins une zéolithe de type TON choisie dans le groupe formé par les zéolithes NU-10, THETA-1, KZ-2 et ISI-1, ledit catalyseur comprenant également au moins un élément hydrogénant introduit sur le support mis en forme et choisi dans le groupe formé par les éléments des groupes VIII et VI.

2. Catalyseur selon la revendication 1, dans lequel la matrice est choisie dans le groupe formé par les composés alumine, silice, magnésie, argile, oxyde de titane, oxyde de bore, zircone, phosphates d'aluminium, phosphates de titane, phosphates de zirconium, et les mélanges de 2 au moins de ces composés.

3. Catalyseur selon l'une des revendications précédentes, dans lequel la zéolithe de type TON est la zéolithe NU-10.

4. Catalyseur selon l'une des revendications précédentes, dans lequel la zéolithe de type TON est la zéolithe Theta-1.

5. Catalyseur selon l'une des revendications précédentes, renfermant :

   - de 10 à 99,9% en poids d'au moins une matrice
   - de 0,05 à 89,95% en poids d'au moins une zéolithe de type TON,
   - de 0,05 à 89,95% en poids d'au moins une zéolithe de type faujasite.

6. Catalyseur selon l'une des revendications précédentes, renfermant:

   - de 20 à 99,9% en poids d'au moins une matrice
   - de 0,05 à 79,95% en poids d'au moins une zéolithe de type structural TON,
   - de 0,05 à 79,95% en poids d'au moins une zéolithe de type structural faujasite (FAU).

7. Catalyseur selon l'une des revendications précédentes, renfermant :

   - de 29,9 à 99,8% en poids d'au moins une matrice
   - de 0,1 à 69% en poids d'au moins une zéolithe de type structural TON,
   - de 0,1 à 69% en poids d'au moins une zéolithe de type structural faujasite.

8. Catalyseur selon l'une des revendications précédentes renfermant également moins de 15% poids d'oxyde de phosphore $P_2O_5$.

9. Procédé d'hydrocraquage de charges pétrolières en présence d'hydrogène à une température de 300-430°C, une pression d'au moins 2 MPa, avec une vitesse volumique horaire de 0,2 à 10 h$^{-1}$, en présence d'un catalyseur comprenant au moins une matrice, au moins une zéolithe de type TON choisie dans le groupe formé par les zéolithes NU-10, Theta-1, KZ-2 et ISI-1, et au moins un élément hydrogénant.

10. Procédé selon la revendication 9 dans lequel les charges sont constituées pour au moins 80% en volume de composés à point d'ébullition initial d'au moins 350°C, à teneur en azote comprise entre 1 et 5000 ppm, à teneur en soufre comprise entre 0,01 et 5% poids.

11. Procédé selon l'une des revendications 9 ou 10, dans lequel la charge, avant d'être soumise à l'hydrocraquage, est hydrotraitée.

12. Procédé selon l'une des revendications 9 à 11, dans lequel le catalyseur est sous forme d'extrudés et comprend au moins un élément hydrogénant choisi dans le groupe formé par les éléments des groupes VIII et VI.

13. Procédé selon l'une des revendications 9 à 12, dans lequel l'élément hydrogénant est introduit sur le support mis en forme.

14. Procédé selon l'une des revendications 9 à 13, dans. lequel la matrice est choisie dans le groupe formé par les composés alumine, silice, magnésie, argile, oxyde de titane, oxyde de bore, zircone, phosphates d'aluminium, phosphates de titane, phosphates de zirconium, et les mélanges de 2 au moins de ces composés.

15. Procédé selon l'une des revendications 9 à 14 dans lequel le catalyseur renferme également moins de 15 % pds d'oxyde de phosphore $P_2O_5$.

**Patentansprüche**

1. Katalysator in Form von Extrudaten, der einen Träger umfasst, der aus wenigstens einer Matrix wenigstens einem Zeolith vom Faujasittyp und wenigstens einem Zeolith vom TON-Typ, gewählt aus der durch die NU-10-, THETA-1-, KZ-2- und ISI-1 Zeolithe gebildeten Gruppe, gebildet ist, wobei der Katalysator gleichermaßen wenigstens ein hydrierendes Element umfasst, das auf dem Träger in Form gebracht wird und aus der durch die Elemente der Gruppen VIII und VI gebildeten Gruppe gewählt ist.

2. Katalysator nach Anspruch 1, bei dem die Matrix aus der durch die Verbindungen Aluminiumoxid, Siliziumoxid, Magnesiumoxid, Ton, Titanoxid, Boroxid, Zirkoniumoxid, Aluminiumphosphate, Titanphosphate, Zirkoniumphosphate und den Mischungen von 2 wenigstens dieser Verbindungen gebildeten Gruppe gewählt ist.

3. Katalysator nach einem der vorhergehenden Ansprüche, bei dem der Zeolith vom Typ TON der NU-10-Zeolith ist.

4. Katalysator nach einem der vorhergehenden Ansprüche, bei dem der Zeolith vom Typ TON der THETA-1-Zeolith ist.

5. Katalysator nach einem der vorhergehenden Ansprüche, umfassend:

   - 10 bis 99,9 Gew.-% wenigstens einer Matrix

   - 0,05 bis 89,95 Gew.-% wenigstens eines Zeolithen vom Typ TON

   - 0,05 bis 89,95 Gew.-% wenigstens eines Zeolithen vom Typ Faujasit.

6. Katalysator nach einem der vorhergehenden Ansprüche, umfassend:

   - 20 bis 99,9 Gew.-% wenigstens einer Matrix

   - 0,05 bis 79,95 Gew.-% wenigstens eines Zeolithen vom Typ TON

   - 0,05 bis 79,95 Gew.-% wenigstens eines Zeolithen vom Strukturtyp Faujasit (FAU).

7. Katalysator nach einem der vorhergehenden Ansprüche, umfassend:

- 29,9 bis 99,8 Gew.-% wenigstens einer Matrix

- 0,1 bis 69 Gew.-% wenigstens eines Zeolithen vom Strukturtyp TON

- 0,1 bis 69 Gew.-% wenigstens eines Zeolithen vom Strukturtyp Faujasit.

8. Katalysator nach einem der vorhergehenden Ansprüche, der ebenso wenigstens 15 Gew.-% Phosphoroxid $P_2O_5$ einschließt.

9. Verfahren zum Hydrocracken von Erölchargen in Gegenwart von Wasserstoff bei einer Temperatur von 300-430°C, einem Druck von wenigstens 2 MPa, mit einer stündlichen Volumengeschwindigkeit von 0,2 bis 10 h$^{-1}$, in Gegenwart eines Katalysators, der wenigstens eine Matrix, wenigstens einen Zeolith vom Strukturtyp TON, gewählt aus der durch die NU-10-, THETA-1-, KZ-2- und ISI-1 Zeolithe gebildeten Gruppe, und wenigstens ein hydrierendes Element umfasst.

10. Verfahren nach Anspruch 9, bei dem die Chargen zu wenigstens 80 Volumen-% aus Verbindungen mit einem Anfangssiedepunkt von wenigstens 350°C bei einem Stickstoffgehalt zwischen 1 und 5000 ppm und einem Schwefelgehalt zwischen 0,01 und 5 Gew.-% bestehen.

11. Verfahren nach einem der Ansprüche 9 oder 10, bei dem die Charge Wasserstoff-behandelt wird, bevor sie dem Hydrocracken unterzogen wird.

12. Verfahren nach einem der Ansprüche 9 bis 11, bei dem der Katalysator in Form von Extrudaten vorliegt und wenigstens ein hydrierendes Element umfasst, das aus der durch die Elemente der Gruppen VIII und VI gebildeten Gruppe gewählt ist.

13. Verfahren nach einem der Ansprüche 9 bis 12, bei dem das hydrierende Element auf dem Träger in Form gebracht wird.

14. Verfahren nach einem der Ansprüche 9 bis 13, bei dem die Matrix aus der durch die Verbindungen Aluminiumoxid, Siliziumoxid, Magnesiumoxid, Ton, Titanoxid, Boroxid, Zirkoniumoxid, Aluminiumphosphate, Titanphosphate, Zirkoniumphosphate und den Mischungen von 2 wenigstens dieser Verbindungen gebildeten Gruppe gewählt ist.

15. Verfahren nach einem der Ansprüche 9 bis 14, bei dem der Katalysator ebenso wenigstens 15 Gew.-% Phosphoroxid $P_2O_5$ einschließt.

**Claims**

1. A catalyst in the form of extrudates comprising a support formed of at least one matrix, at least one faujasite type zeolite and at least one TON type zeolite selected from the group formed by Nu-10, THETA-1, KZ-2, or ISI-1 zeolites, said catalyst also comprising at least one hydrogenating element introduced on the shaped support and selected from the group formed by elements of groups VIII and VI.

2. A catalyst according to claim 1, in which the matrix is selected from the group formed by the following compounds: alumina, silica, magnesia, clays, titanium oxide, boron oxide, zirconia, aluminium phosphates, titanium phosphates or zirconium phosphates, and mixtures of at least two of these compounds.

3. A catalyst according to any one of preceding claims, in which the TON type zeolite is NU-10 zeolite.

4. A catalyst according to any one of preceding claims, in which the TON type zeolite is Theta-1 zeolite.

5. A catalyst according to any one of the preceding claims, comprising:

   • 10% to 99.9% by weight of at least one matrix;
   • 0.05% to 89.95% by weight of at least one TON type zeolite;
   • 0.05% to 89.95% by weight of at least one faujasite type zeolite.

6. A catalyst according to any one of the preceding claims, comprising:

   - 20% to 99.9% by weight of at least one matrix;
   - 0.05% to 79.95% by weight of at least one zeolite with structural type TON;
   - 0.05% to 79.95% by weight of at least one zeolite with structural type faujasite (FAU).

7. A catalyst according to any one of the preceding claims, comprising:

   - 29.9% to 99.8% by weight of at least one matrix;
   - 0.1% to 69% by weight of at least one zeolite with structural type TON;
   - 0.1% to 69% by weight of at least one faujasite type zeolite.

8. A catalyst according to any one of the preceding claims, also comprising less than 15% by weight of phosphorous oxide $P_2O_5$.

9. A process for hydrocracking petroleum feeds in the presence of hydrogen at a temperature between 300-430°C, a pressure of at least 2 MPa, with an hourly space velocity of 0.2 to 10 $h^{-1}$ in the presence of a catalyst comprising at least one matrix, at least one faujasite type zeolite, at least one TON type zeolite selected from the group formed by NU-10, Theta-1, KZ-2 and ISI-1 zeolites, and at least one hydrogenating element.

10. A process according to claim 9, in which the feeds are constituted by at least 80% by volume of compounds with an initial boiling point of at least 350°C, a nitrogen content which is in the range 1 to 5000 ppm, and a sulphur content which is in the range 0.01% to 5% by weight.

11. A process according to claim 9 or claim 10, in which the feed is hydrotreated before undergoing hydrocracking.

12. A process according to any one of the claims 9 to 11, in which the catalyst is in the form of extrudates and comprises at least one hydrogenating element selected from the group formed by elements of groups VIII and VI.

13. A process according to any one of the claims 9 to 12, in which the hydrogenating element is introduced on the shaped support.

14. A process according to any one of the claims 9 to 13, in which the matrix is selected from the group formed by the following compounds: alumina, silica, magnesia, clays, titanium oxide, boron oxide, zirconia, aluminium phosphates, titanium phosphates or zirconium phosphates, and mixtures of at least two of these compounds.

15. A process according to any one of the claims 9 to 14, in which the catalyst also comprises lass than 15% wt of phosphorous oxide $P_2O_5$.